# EUROPÄISCHE PATENTSCHRIFT

(11) **EP 1 319 168 B1**
(45) Veröffentlichungstag und Bekanntmachung des Hinweises auf die Patenterteilung: **14.06.2006**
(21) Anmeldenummer: 01974266.7
(22) Anmeldetag: 19.09.2001
(51) Int. Cl.: G01D 1/18, G01F 15/06

(54) **GRENZWERTSENSOR-VORRICHTUNG**
THRESHOLD SENSOR DEVICE
CAPTEUR DE SEUIL

(30) Priorität: 22.09.2000 DE 10047113
(43) Veröffentlichungstag der Anmeldung: 18.06.2003
(73) Patentinhaber: Pepperl + Fuchs GmbH, 68307 Mannheim (DE)
(72) Erfinder: FEY, Wilhelm, 67246 Dirmstein (DE); KRAUSE, Ernst, 68723 Oftersheim (DE)
(74) Vertreter: Heim, Hans-Karl
(86) Internationale Anmeldenummer: PCT/EP2001/010841
(87) Internationale Veröffentlichungsnummer: WO 2002/029364

(56) Entgegenhaltungen:
- EP-A- 0 372 442
- EP-A- 0 512 161
- WO-A-93/06572
- DE-A- 19 846 639

## Beschreibung

Die Erfindung betrifft eine Grenzwertsensor-Vorrichtung, mit einer Sensoreinrichtung zum Nachweis einer Messgröße und einer der Sensoreinrichtung zugeordneten Schalteinrichtung zum Schalten eines Lastkreises, wobei die Schalteinrichtung zu ihrer Ansteuerung einen Steuerkreis mit Steueranschlüssen aufweist, mit welchem die Sensoreinrichtung in Wirkverbindung steht, wobei die Schalteinrichtung einen mit Hilfe des Steuerkreises schaltbaren und von diesem galvanisch getrennten Ausgangskreis mit Ausgangsanschlüssen aufweist, bei welchen in mindestens einem Schaltzustand eine galvanische Trennung gegeben ist, wobei die Sensoreinrichtung lastkreisunabhängig ausgebildet ist und wobei der Lastkreis in direkter Wirkverbindung mit dem Ausgangskreis der Schalteinrichtung angeordnet ist.

Unter der Bezeichnung Sensoreinrichtung wird nachfolgend prinzipiell jede Art von Sensoreinrichtung verstanden, die im Wesentlichen aus einem entsprechenden Messfühler, der mechanischen Konstruktion und einer entsprechenden Anpassungselektronik besteht. Diese Anpassungselektronik weist demzufolge auch den entsprechenden Ausgangskreis auf, der zur Ansteuerung eines der Sensoreinrichtung zugeordneten Lastkreises am Ausgang vorgesehen ist.

Als spezielle Art einer derartigen Sensoreinrichtung wird hierbei auf eine Grenzwertsensor-Einrichtung abgestellt, die bei Erreichen eines vorgegebenen Wertes, der analog oder binär sein kann, einen oder mehrere Schaltausgänge betätigt. Eine derartige Grenzwertsensor-Einrichtung kombiniert daher einen Messfühler oder Geber mit der Anpassungselektronik, die die Auswerte- und Ausgabefunktion aufweist, innerhalb der entsprechenden Sensoreinrichtung.

Als derartige Sensoreinrichtung wird erfindungsgemäß ein Näherungssensor eingesetzt. Hierbei kann es sich beispielhaft um induktive und kapazitive Näherungsschalter, opto-elektronische Sensoren, Ultraschall-Näherungsschalter, Magnet- und Magnetfeld-Sensoren ebenso wie Füllstands-Sensoren handeln.

Ein Problem bei derartigen Sensorvorrichtungen ist, dass die Schalteinrichtung im Ausgangskreis, die zur Ansteuerung eines Lastkreises bzw. einer entsprechenden Last vorgesehen ist, entweder als Transistor oder Transistorstufe aufgebaut ist oder als elektro-mechanisches Relais.

Wurde die Transistorlösung als Schalteinrichtung gewählt, so bestand zwar die Möglichkeit, dies auf einem Layout mit der entsprechenden Anpassungselektronik des Sensors auszuführen. Ein ganz wesentlicher Nachteil bestand aber darin, dass zwischen dem Steuerkreis und dem Lastkreis bei einem einfachen, kostengünstigen Aufbau keine galvanische Entkopplung vorhanden war. Es konnten daher Potenzialverschleppungen auftreten. Auch besteht beim Transistor das Problem, dass er Wechselspannungen nicht schalten kann.

Beim Einsatz eines elektro-mechanischen Relais als Schalteinrichtung im Ausgangskreis hatte man die Nachteile einer relativ großen Baugröße in Kauf zu nehmen, ebenso wie eine relativ hohe Ansteuerleistung von beispielsweise 200 mW.

Es ist nicht erkennbar, dass sich die Nachteile der Lösungen mit konventionellen elektro-mechanischen Relais im Hinblick auf Leistungsaufnahme, HF-Tauglichkeit, Baugröße und Anzahl der maximalen Schaltspiele durch eine stetige Weiterentwicklung auf dem Gebiet dieser Relais in absehbarer Zeit lösen lassen.

In EP 0 372 442 A2 ist ein Schaltgerät für die Beleuchtungssteuerung in der Gebäudeinstallationstechnik beschrieben, bei dem zwischen einem Sonnenlicht-Helligkeitssensor mit einem Schwellwertschalter und einem Schaltteil mit einem Schaltkontakt eine Infrarot-Sendestrecke vorgesehen ist.

In der DE 198 54 450 A1 und der DE 42 05 029 C1 werden Herstellungsverfahren für mikromechanische Relais auf Silizium-Basis beschrieben. Es wird dabei in wesentlichen Zügen auf Verfahren der Halbleiter- insbesondere der Silizium-Technologie zurückgegriffen. Die Mikro-Relais zeichnen sich durch ein elektrostatisches Schaltprinzip und damit durch sehr geringe Ansteuerleistungen aus.

Ein piezoelektrisches Mikro-Relais mit reduziertem Energieverbrauch ist in der JP 06 060 788 A offenbart.

Eine Anwendung von mikromechanischen Relais zeigt die DE 41 00 634 A1. Eine Vielzahl von Mikromelais ist dort matrixartig in einer Prüfvorrichtung zum Testen von bestückten Leiterplatten zusammengeschaltet.

Eine weitere Einsatzmöglichkeit für mikromechanische Relais ist in der DE 198 46 639 A1 beschrieben. Um besonders hohe Schalt-Spannungen und -Ströme zu erzielen sind dort eine Vielzahl von Mikro-Relais in einem Schaltfeld seriell bzw. parallel geschaltet. Im Vergleich zu einem alternativ einsetzbaren Schutz werden durch die Verwendung von Mikro-Relais deutlich kürzere Ansprechzeiten erzielt.

Der Erfindung liegt die **Aufgabe** zugrundeeine Grenzwertsensor-Vorrichtung mit miniaturisierter Schalteinrichtung im Ausgangsbereich zu realisieren, wobei ein modulartiger Aufbau sowie eine verbesserte Ansteuerung der Schalteinrichtung mit hohen Schaltgeschwindigkeiten und einer hohen Anzahl von Schaltspielen möglich sein soll.

Diese Aufgabe wird erfindungsgemäß bei einer Sensorvorrichtung mit den Merkmalen des Anspruches 1 gelöst.

Ein wesentlicher Grundgedanke ist hierbei, ein Silizium-Mikro-relais, also eine im Wesentlichen mikromechanische Schalteinrichtung zu verwenden. Mit anderen Worten, eine Schalteinrichtung mit mindestens einem Schaltelement zu schaffen, das noch als mikro-mechanischer Schalter bezeichenbar ist, aber mit äu-ßerst leistungsarmen Antrieb, und z.B. nach dem elektrostatischen oder piezoelektrischen Prinzip betätigbar ist. Diese Mikro-Einrichtung weist vorzugsweise bei einem Schichtaufbau in Art eines Halbleiter-Chips, Mikromechanik-Komponenten incl. evtl. nötiger Elektronik auf. Hierbei werden die Vorteile des Transistors im Hinblick auf seine Miniaturisierung, geringe Ansteuerleistung und hohe Schaltgeschwindigkeit etc. ebenso beibehalten, wie die relativ einfache Integrationsmöglichkeit im Rahmen ein- und desselben Layouts mit der Anpassungselektronik für die übrige Sensorvorrichtung. Bei dieser Auslegung der Schalteinrichtung werden aber auch die Vorteile elektromechanischer Relais beibehalten, insbesondere die galvanische Trennung zwischen Steuerkreis der Schalteinrichtung und dem Lastkreis, sowie die galvanische Trennung der Anschlüsse des Lastkreises selbst. Die erfindungsgemäße Auslegung der Sensorvorichtung und Verwendung der Schalteinrichtung eröffnet daher die Möglichkeit einer relativ einfachen Beschaltung der Schalteinrichtung zu deren Ansteuerung und des Ausgangskreises, die darüber hinaus in schaltungstechnisch einfacher Weise modulartig, z.B. für das Schalten mehrerer, auch unterschiedlicher Lastkreise, ausbaubar ist.

Erfindungsgemäß ist diese Schalteinrichtung als Mikro-Einrichtung in Form eines Mikro-Relais MR, insbesondere auf der Basis von Materialien und Verfahren realisiert, wie sie in der Mikro-Mechanik oder bei der Halbleiterherstellung üblich sind.

Erfindungsgemäß wird hierfür in sehr vorteilhafter Weise ein Mikro-Relais z.B. auf Silizium-Basis gewählt, das einen geeigneten Schichtaufbau z.B. ähnlich dem bei Halbleiter-Bauelementen haben kann, und dessen Schichten verfahrenstechnisch so strukturiert sind, dass das eigentlich schaltende, mechanische Element durch elektrostatische oder piezoelektrische Kräfte, also Ladungsveränderung, betätigbar ist. Eine übliche Ansteuerleistung kann daher im Bereich von etwa 10 µW liegen. Im Hinblick auf die Kontaktgabe bzw. das Öffnen der Kontakte kann dieses Silizium-Mikro-Relais also ähnlich der Art einer Blattfederfunktion, eines Biegebalkens o.ä. arbeiten. Im US-Patent 05638946 ist ein Relais mit Biegebalken beispielhaft beschrieben.

Die Ausbildung der Schalteinrichtung als Mikro-Einrichtung gestattet es aber auch, eine integrierte Ausführung mit der Sensorvorrichtung bzw. deren Anpassungselektronik herbeizuführen, wobei Ausführungsformen als Bauteil oder Baugruppe, z.B. auf der Platine der Sensorvorrichtung oder als SMD oder auch in der Realisierung als Chip zusammen mit der weiteren Anpassungselektronik der Sensorvorrichtung, ebenso wie als separater Chip, denkbar sind.

Die galvanische Trennung zwischen Steuerkreis und Lastkreis sowie zwischen den Anschlüssen des Lastkreises wird jedoch als gravierender Vorteil bei der Verwendung der Schalteinrichtung in einer erfindungsgemäßen Sensorvorrichtung beibehalten.

Die zweckmäßige Verwendung eines Mikro-Relais als Schalteinrichtung in einer Sensorvorrichtung gestattet es, den Bezug auf ein dem Ansteuerkreis und dem Lastkreis gemeinsamen Potenzial aufzuheben, so dass eine hohe Flexibilität im Hinblick auf die Ansteuerung und Beschaltung von Lastkreisen erreichbar ist.

Die Realisierung einer Wirkungsrichtungsumkehr ist hierbei ebenfalls möglich.

Aufgrund der hohen Eingangsimpedanz des Mikro-Relais und der galvanischen Trennung zwischen Steuerkreis und Lastkreis kann die Wirkungsrichtungsumkehr einfach durch ein entsprechendes Einfügen des MR an unterschiedliche Positionen im Schaltplan erfolgen, ohne dass zusätzliche Bauelemente oder weitere Beschaltungen für das Erreichen dieser Flexibilität erforderlich sind. Der Layoutaufwand und die Größe der resultierenden Baugruppe für die Sensorvorrichtung kann daher minimal gehalten werden, zumal alle verwendeten Bauelemente als SMDs verwendet werden können.

Ein ganz gravierender Vorteil gegenüber der Verwendung herkömmlicher Relais wird mit dem Mikro-Relais durch sein hohe Vibrationsfestigkeit erreicht, was den Einsatz- und Anwendungsbereich erheblich erweitert und die Fehlerwahrscheinlichkeit reduziert.

Die Auslegung der Schalteinrichtung im Ausgangskreis einer Sensorvorrichtung mit einem Mikro-Relais ermöglicht daher nicht nur die Verwirklichung der Vorteile früherer im Stand der Technik eingesetzter Baugruppen und Bauelemente, sondern gestattet in überraschender Weise auch neue, erheblich vereinfachte Ansteuerungs- und Schaltungsmöglichkeiten. Dies gilt auch im Hinblick auf mehrkanalige Auslegungen des Ausgangskreises der Sensorvorrichtung.

Die Erfindung wird nachfolgend anhand schematischer Darstellungen der Schalteinrichtung, ihres inneren Aufbaues sowie der externen Ansteuerungsmöglichkeiten und internen wie externen Schaltungskonfigurationen noch näher beschrieben. Es zeigen:
- Fig. 1a, 1b:: den schematischen Aufbau eines Mikro-Relais mit separatem Signaleingang sowie die verkürzte, symbolhafte Darstellung;
- Fig. 1c:: die symbolhafte Darstellung eines Mikro-Relais ohne separaten Signaleingang mit Ansteuerung über die Versorgungsspannung;
- Fig. 1d, 1e:: die Auslegungsmöglichkeit eines Mikro-Relais auf einem Chip mit dem Schaltelement als Schließer;
- Fig. 2a, 2b:: die symbolhafte Darstellung eines Mikro-Relais als Öffner mit separatem Signaleingang und ohne separaten Signaleingang;
- Fig. 3a, 3b:: die prinzipiellen externen Beschaltungsmöglichkeiten eines Mikro-Relais;
- Fig. 4a, 4b:: die Vereinfachung der Ausgangsanschlüsse eines Mikro-Relais mit 3-Punkt-Anschluss und interner galvanischer Verbindung sowie externer Beschaltungsmöglichkeit;
- Fig. 5a, 5b:: eine analoge Ausführungsform nach den Figuren 4 mit vereinfachtem Lastkreis;
- Fig. 6a, 6b:: Ausführungsformen eines Mikro-Relais mit interner galvanischer Verbindung und einer Wirkungsrichtungsumkehr;
- Fig. 7a, 7b:: die Realisierung eines Gegentaktausganges der Sensorvorrichtung als 3-Punkt-Sensor auf der Basis von zwei Mikro-Relais;
- Fig. 8a, 8b, 8c:: die Realisierung zweikanaliger Ausführungsformen der Sensorvorrichtung mittels zweier, weitgehend parallel geschalteter Mikro-Relais, teilweise mit einer Wirkungsrichtungsumkehr;
- Fig. 9a, 9b, 9c:: 9a eine allgemeine Schaltstufe;
9b,c Anschaltmöglichkeiten des Mikro-Relais für unterschiedliche Wirkungsrichtung;
- Fig.10a, 10b:: Möglichkeiten der programmierbaren Wirkungsrichtungsumkehr eines Mikro-Relais über Brückenglieder oder eine Gleichrichterbrücke.

In einer weiteren Betrachtung wird die Sensorvorrichtung als aus einer Baugruppe mit dem entsprechenden Messwertaufnehmer, z.B. einem induktiven Sensor, verstanden, dem eine entsprechende Anpassungselektronik mit einem Ausgangskreis zugeordnet ist. Dieser Ausgangskreis weist mindestens eine entsprechende Schalteinrichtung auf, die vorzugsweise ein Mikro-Relais MR ist, und hat mindestens ein Schaltelement zur Schaltung des nachgeordneten Lastkreises.

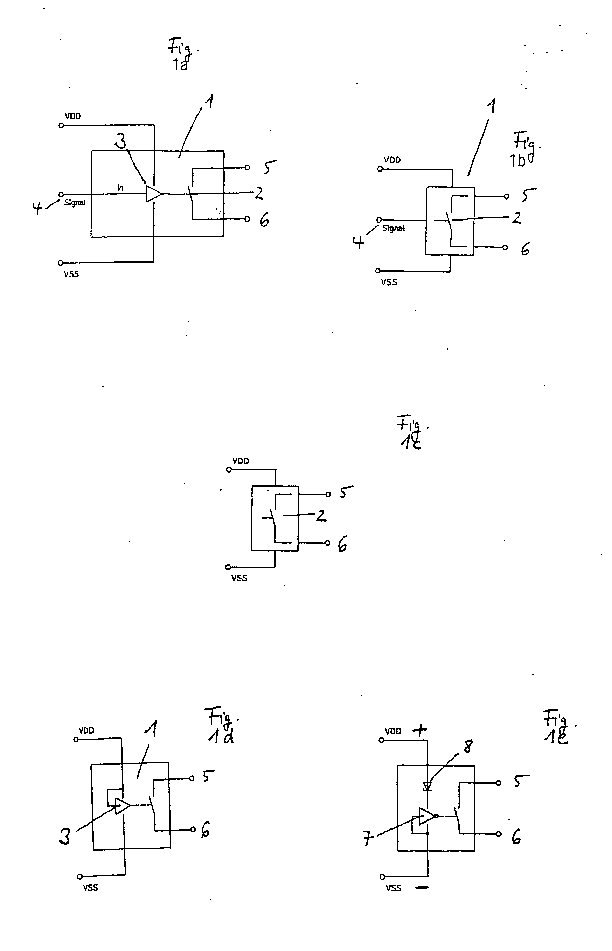

In den Figuren 1a bis 1e ist ein entsprechendes Mikro-Relais 1 in vereinfachter Form und symbolhaft dargestellt. Ebenfalls ist kurz auf die Möglichkeiten der Ausführung des Mikro-Relais als Chip mit externen Beschaltungsalternativen eingegangen.

Die Figuren 1a bis 1e betreffen dabei beispielhaft das Mikro-Relais 1 als "Schließer".

In der Fig. 1a ist das Mikro-Relais 1 mit seinen Anschlüssen schematisch dargestellt, wobei der umrandete Block einen kontinuierlich mit einer Versorgungsspannung zwischen den Anschlüssen VDD und VSS beaufschlagten Verstärker 3 zeigt. Dieser Verstärker 3 erhält ein Eingangssignal 4 und wirkt ausgangsseitig auf den eigentlichen Schalter 2, der in der Darstellung nach Fig. 1a geöffnet ist.

In der weiteren Beschreibung wird nachfolgend symbolhaft das Mikro-Relais 1 in der Funktion eines Schließers entsprechend der Figur 1b verwendet.

In Fig. 1c ist eine andere Ausführungsform eines Mikro-Relais 1 als Schließer dargestellt, bei dem der separate Steuereingang entfällt und die Schaltfunktion durch das Anlegen einer entsprechenden Versorgungsspannung bzw. dem Erreichen einer entsprechenden Spannungsdifferenz ausgeführt wird.

In den Figuren 1d und 1e sind beispielhaft zwei Ausführungsformen für eine Chip-interne Lösung beim Mikro-Relais und dessen externe Beschaltung gezeigt.

Im Beispiel nach 1d ist ein Eingang des Verstärkers 3 auf den Anschluss VDD gelegt.
Entsprechend der Fig. 1e zeigt diese andere Ausführungsform einen Eingang des als Inverter ausgebildeten Verstärkers auf dem Anschluss VSS liegend. Der andere Versorgungsspannungsanschluss VDD ist über eine Diode 8 als Verpolschutz auf den Inverter gelegt. Im Beispiel nach Fig. 1e könnte die Diode 8 auch entfallen.

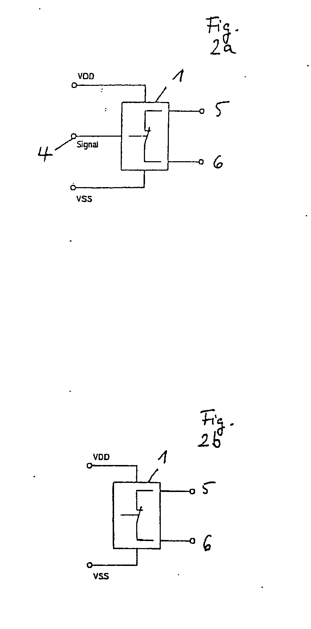

In ganz analoger Weise kann das Mikro-Relais 1 auch als "Öffner" ausgebildet sein, was in den Figuren 2a, 2b dargestellt ist. Entsprechend der Ausführungsform nach Fig. 2a ist das Mikro-Relais 1 mit einem separaten Signaleingang 4 ausgestattet und mit einer kontinuierlichen Spannungsversorgung zwischen VDD und VSS. Entsprechend der Fig. 2b kann dieser separate Signaleingang auch entfallen, wobei die Steuerung dann über die entsprechende Versorgungsspannung erfolgt und z.B. eine Aktivierung mit Öffnung des Schalters dann erreichbar ist, wenn eine Steuerspannung an den Eingangsanschlüssen des Mikro-Relais liegt.

Eine Chip-interne Konfiguration lässt sich beim Mikro-Relais als Öffner in gleicher Weise wie beim Schließer entsprechend den Figuren 1d und 1e realisieren.

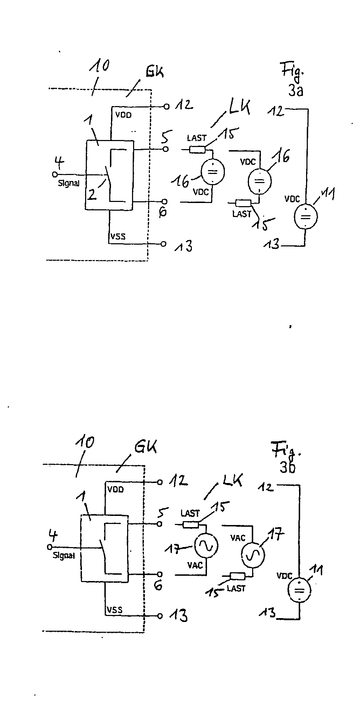

In den Fig. 3a und 3b ist schematisch eine einkanalige Anwendung der Sensorvorrichtung bzw. des Ausgangskreises 10 der Sensorvorrichtung mit fester Wirkungsrichtung gezeigt.

Der Ausgangskreis 10, der auch als Gerätekreis GK bezeichnet werden kann, zeigt einerseits ein Mikro-Relais 1 entsprechend der Darstellung nach Fig. 1b. Dieses Mikro-Relais erhält seine kontinuierliche Gleichspannungsversorgung über die Anschlussklemmen 12, 13 von einer Gleichspannungsquelle 11.
Der Lastkreis ist hierbei schematisch mit einer Last 15 und einer Gleichspannungsquelle 16 dargestellt, die über die Ausgangsanschlüsse 5 und 6 des Mikro-Relais 1 schaltbar ist. Aufgrund der galvanischen Trennung am Schalter 2 des Mikro-Relais 1 kann der Lastkreis innerhalb der Spannungsfestigkeit des Mikro-Relais 1 auf beliebiges Potenzial gelegt werden.

Die Fig. 3b zeigt den gleichen Aufbau wie die Fig. 3a, jedoch ist der Lastkreis LK schematisch mit einer Wechselspannungsquel-1e 17 dargestellt.
Hierdurch wird auch verdeutlicht, dass der Lastkreis LK aufgrund der galvanischen Trennung zum Steuerkreis des Mikro-Relais 1 auch wechselspannungsmäßig beaufschlagt werden kann. Der Lastkreis LK kann daher mit einer beliebigen zeitvarianten und/oder beliebig gepolten Spannung versorgt werden und ist daher beispielsweise auch für geschaltete Datenleitungen oder für Schnittstellen geeignet.

Die Darstellungen nach den Figuren 3a, 3b zeigen daher schematisch die Anwendung des Mikro-Relais 1 mit dem höchsten Freiheitsgrad in Bezug auf die Verschaltung des Ausgangskreises 10 bzw. Gerätekreises GK mit dem Lastkreis LK. Die Anwendungsmöglichkeiten erfordern jedoch auch umfangreichen externen Verdrahtungsaufwand.

Ausgehend von den Schaltungen nach den Figuren 3a, 3b sind daher nachstehende Schaltungsmöglichkeiten und Beschaltungsmöglichkeiten realisierbar:
Der Ausgangskreis 10 bzw. Gerätekreis GK und der Lastkreis LK haben keine galvanische Verbindung, wie es dargestellt ist. Der Ausgangskreis 10 und der Lastkreis LK haben außerhalb der Sensorvorrichtung bzw. des Ausgangskreises 10 oder innerhalb des Ausgangskreises 10 eine galvanische Verbindung, z.B. ein gleiches Bezugspotenzial oder eine Summation von Spannungen bei ungleichem Bezugspotenzial.Im Falle einer galvanischen Verbindung kann der freibleibende Ausgang 5 oder 6 entweder p-schaltend oder n-schaltend ausgelegt sein. Unter p-schaltend versteht man hierbei ein Schalten gegenüber einem positiven Potenzial bzw. bei n-schaltend ein Schalten gegenüber einem negativen Potenzial.
Der Ausgangskreis 10 oder der Lastkreis können unterschiedliche Spannungswerte oder Amplituden haben.
Der Ausgangskreis und der Lastkreis können gleich- oder gegensinnig gepolt sein. Auch kann der Lastkreis von wechselnder Polarität bezogen auf den Ausgangskreis sein.

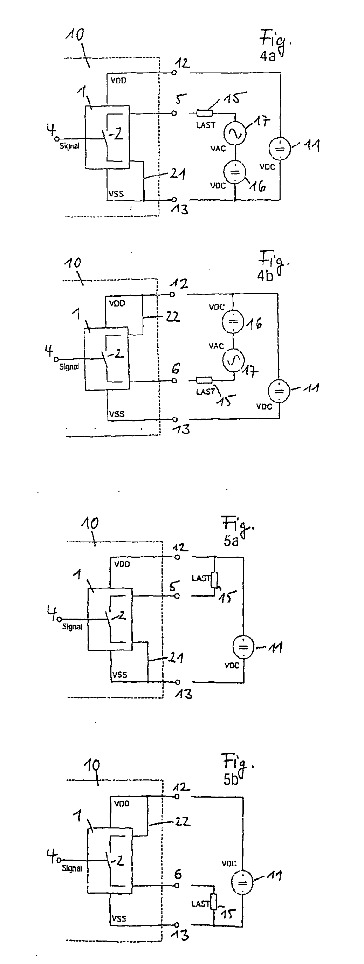

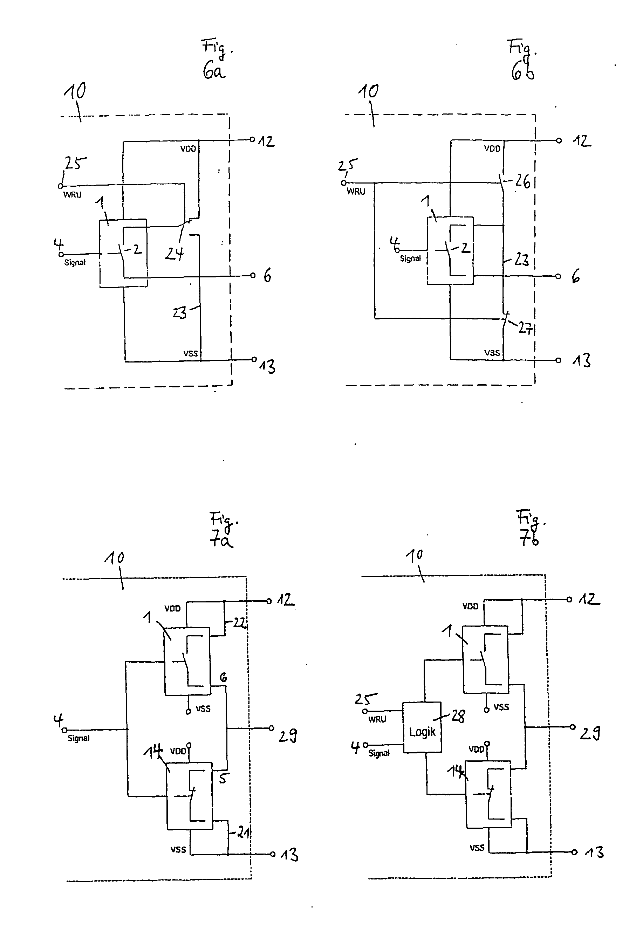

Die in den Figuren 3a und 3b gezeigten universellen Anschlussmöglichkeiten mit äußerer Verdrahtung des Lastkreises und des Spannungsversorgungskreises lassen sich für Anwendungen mit einer galvanischen Verbindung zwischen dem Ausgangskreis 10 bzw. dem Gerätekreis GK und dem Lastkreis LK, was in den Figuren 4a und 4b sowie mit weiterer Vereinfachung in den Figuren 5a, 5b dargestellt ist, erheblich vereinfachen.

Wird eine galvanische Verbindung zwischen dem Ausgangskreis 10 der Sensorvorrichtung und dem Lastkreis LK erforderlich, so kann dies vorteilhafterweise intern in der Sensorvorrichtung bzw. dem Ausgangskreis 10 durch eine galvanische Verbindung 21 zwischen dem Schalter 2 des Mikro-Relais 1 und der Anschlussklemme 13 gegenüber dem Potenzial VSS gelöst werden. Die weitere Beschaltung des Lastkreises bzw. der Last 15 liegt dann an der Ausgangsklemme 5 und ist andererseits auf das Potenzial der Anschlussklemme 13 gelegt. Im Beispiel nach Fig. 4a geschieht dies über eine im Lastkreis LK liegende Gleichspannungsquelle 16, der eine Wechselspannung der Wechselspannungsquelle 17 'überlagert ist.

Es sei darauf hinzuweisen, dass gleiche Bezugszeichen in den Figuren auch gleiche.Baugruppen und Elemente betreffen, so dass aus Vereinfachungsgründen nicht alle Baugruppen in einer entsprechenden Figur aufgeführt werden müssen. Auf dem Wege der Vereinfachung und einer internen Verbindung zwischen den Anschlussklemmen 6 und 13 nach Fig. 3a kann daher ein 3-Draht-Sensor in typischer Norm-konformer Anschlussart gemäß Fig. 4a erreicht werden:

Die Variante nach Fig. 4b unterscheidet sich von dem Beispiel nach Fig. 4a dadurch, dass die interne galvanische Verbindung 22 innerhalb des Ausgangskreises 10 auf die positive Anschlussklemme 12 geführt ist. Der Lastkreis LK liegt daher an dem Ausgangsanschluss 6 und der Anschlussklemme 12, die am positiven Potenzial der Versorgungsgleichspannung VDC 11 liegt.

In den Ausführungsbeispielen nach den Figuren 4a und 4b kann das am Lastkreis LK anliegende Potenzial entsprechend der gezeigten Beschaltung innerhalb oder außerhalb der Versorgungsgleichspannung 11 liegen.

Der in den Figuren 4a und 4b mit drei Anschlüssen ausgestattete Ausgangskreis 10 der Sensorvorrichtung, der dementsprechend auch als 3-Draht-Sensor bezeichnet werden kann, lässt daher unter Berücksichtigung der internen galvanischen Verbindung 21 bzw. 22 die Vorteile zu, wie sie zu den Beispielen nach Figuren 3a, 3b genannt worden sind. Insbesondere kann der freibleibende Ausgang p- bzw. n-schaltend ausgelegt werden. Lastkreis LK und Ausgangskreis 10 können unterschiedliche Spannungswerte und Amplituden haben und/oder können gleich- oder gegensinnig gepolt sein. Der Lastkreis LK kann bezogen auf den Ausgangskreis 10 eine wechselnde Polarität haben und kann auch mit einer beliebigen zeitvarianten und/oder beliebig gepolten Spannung versorgt werden.

Eine weitere Vereinfachung ist in den Beispielen nach den Figuren 5a und 5b dargestellt. Nach Fig. 5a ist die Last 15 des Lastkreises an den Ausgangsanschluss 5 und andererseits an die Anschlussklemme 12 auf positives Potenzial der Versorgungsgleichspannung 11 gelegt.
Im Beispiel nach Fig. 5b liegt die Last 15 zwischen dem Ausgangsanschluss 6 an der Anschlussklemme 13 bzw. negativen Potenzial der Versorgungsgleichspannung 11.
In dieser Vereinfachungsvariante können daher die in der Praxis gebräuchlichsten Ausführungsformen realisiert werden, die anwendungsübliche Anschlussarten mit beliebigen Kombinationen von n-schaltend, p-schaltend, Öffner und Schließer entsprechen.

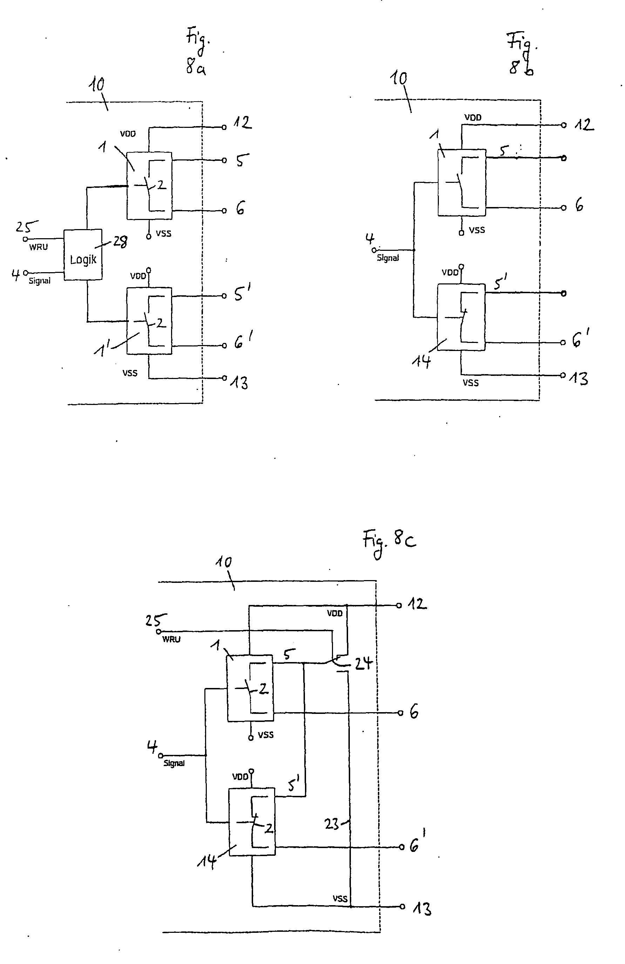

Eine Weiterentwicklung des Ausgangskreises 10 gemäß den Figuren 4a, 4b ist in der Fig. 6a dargestellt. In der Ausführungsform nach Fig. 6a ist das Bezugspotenzial für den Lastkreis nunmehr umschaltbar ausgelegt. Hierzu wird zwischen dem Versorgungspotenzial VDD an der Anschlussklemme 12 und dem Potenzial VSS an der Anschlussklemme 13 ein Umschalter 24 vorgesehen. Dieser Umschalter 24 kann über eine Wirkungsrichtungsumkehr WRU am WRU-Anschluss 25 umschaltbar sein. Bei Ansteuerung des Mikro-Relais 1 und Schließen des Schalters 2 gelangt in der Stellung nach Fig. 6a der Ausgangsanschluss 6 für den Lastkreis auf das Potenzial VDD. Bei Betätigung der Wirkungsrichtungsumkehr und beim Schalten des Umschalters 24 würde daher das Potenzial VSS an den Ausgangsanschluss 6 gelegt werden können.

Auf diese Weise kann daher der entsprechende Ausgang 6 des Mikro-Relais 1 wahlweise an den einen oder den anderen Pol der Versorgungsspannung gelegt werden, also p-schaltend und n-schaltend ausgelegt werden. Der Umschalter 24 selbst kann dabei in beliebiger geeigneter Form ausgeführt sein, z.B. als interne Brücke, als Schaltlogik oder sonstige interne Verdrahtungsprogrammierung.

Anstelle des Umschalters 24 nach Fig. 6a kann die gleiche Funktionalität bei der internen Beschaltung nach Fig. 6b durch den Einsatz von zwei einfachen Schaltern 26 und 27 erreicht werden, die auch als weitere Mikro-Relais ausgeführt sein können.

Die zu den Figuren 4a, 4b angeführten Vorteile und Beschaltungsmöglichkeiten bleiben daher erhalten, werden aber im Hinblick auf p-schaltend oder n-schaltend noch erweitert.

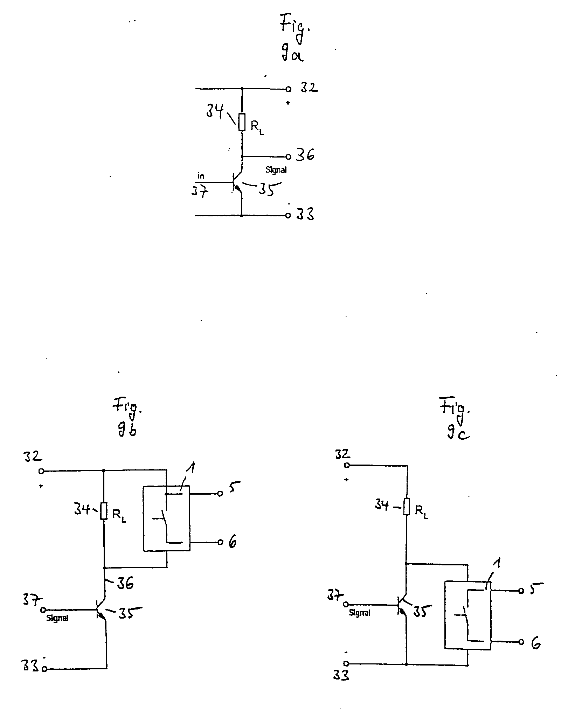

Zur Auslegung des 3-Draht-Sensors mit einem Gegentakt-Ausgang 29 ist im Beispiel nach Fig. 7a der Ausgangskreis 10 der Sensorvorrichtung mit einem zweiten Mikro-Relais 14 ausgestattet, das als Öffner ausgelegt ist. Das obere Mikro-Relais 1 entspricht dabei der internen Beschaltung nach Fig. 4b. Das untere, zweite Mikro-Relais 14 hat eine interne Beschaltung entsprechend dem Beispiel nach Fig. 4a, wobei das Mikro-Relais selbst als Öffner ausgebildet ist. Die entsprechenden Anschlüsse 5 und 6 der beiden Mikro-Relais sind auf den Gegentaktausgang 29 geführt. Beide Mikro-Relais 1, 14 erhalten über einen Signalanschluss 4 ein gleiches Ansteuerungssignal.

Entsprechend der Fig. 7a liegt in einem Schaltzustand das Potenzial VSS von der Anschlussklemme 13 am Gegentaktausgang 29. In dem anderen Schaltzustand öffnet das Mikro-Relais 14 und schließt das Mikro-Relais 1, womit der Gegentaktausgang 29 das Potenzial VDD von der Anschlussklemme 12 erhält.

Durch die Möglichkeit, die Last zwischen VDD und Ausgang oder zwischen VSS und Ausgang zu schalten, kann bei diesem internen Aufbau die Wirkungsrichtung gewählt werden.
Der Gegentaktausgang 29 kann daher alternierend p- und n-schaltend arbeiten.
Aufgrund dieser Funktionsweise ist bei induktiven Lasten keine weitere Freilaufdiode mehr notwendig. Dies reduziert insbesondere bei hohen Schaltfrequenzen die in der Sensorvorrichtung abzuführende Verlustleistung.

Eine weitere Erhöhung der Funktionalität der Schaltung nach Fig. 7a erreicht man dadurch, dass eine steuerbare Wirkungsrichtungsumkehr WRU zusätzlich an einem Anschluss 25 vorgesehen wird. Im Beispiel nach Fig. 7b wird der WRU-Anschluss 25 und der Signalanschluss auf eine Logik 28 gegeben, die die jeweiligen Mikro-Relais 1, 14 ansteuert. Die Beschaltung nach Fig. 7b mit einer steuernden WRU und evtl. zusätzlicher Logik ermöglicht daher Ausgangsvarianten mit beliebigen Kombinationen von n-schaltend, p-schaltend, Öffner und Schließer in einem Sensor bzw. in dessen Ausgangskreis 10.

Die Steuerlogik ermöglicht beispielsweise auch die Verwendung gleichartiger Mikro-Relais, so dass z.B. beide Mikro-Relais wahlweise als Schließer oder Öffner ausgelegt sein können.

Alternativ zu der in Fig. 7b gezeigten Beschaltung kann die WRU auch durch interne oder externe Brücken realisiert werden.

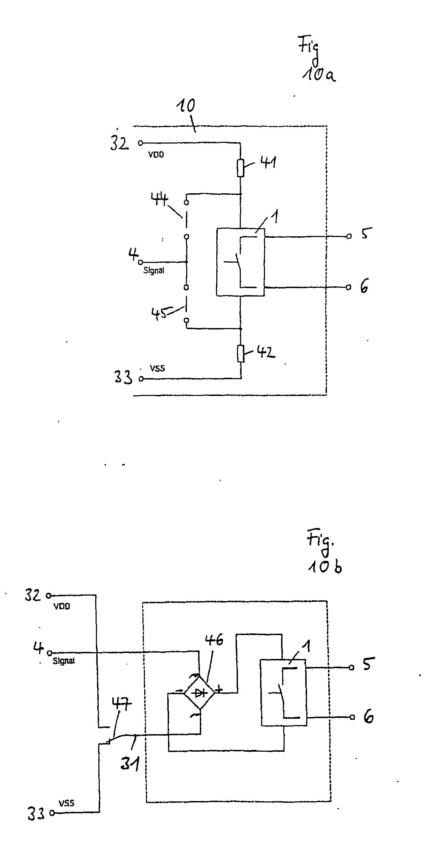

Die in den Figuren 7a, 7b gezeigte Schaltung kann vorteilhafterweise relativ einfach zu einer zweikanaligen potenzialfreien Form erweitert werden. Hierzu werden z.B. die beiden Ausgangsanschlüsse der in der Figur 7a gezeigten Mikro-Relais 1, 14 nach außen geführt, wie dies in der Fig. 8a dargestellt ist. Damit erhält man zwei unabhängige, galvanisch getrennte Ausgänge 5,6 bzw. 5', 6', wobei im Beispiel nach Fig. 8a aufgrund der Logikschaltung 28 mit Signalanschluss 4 und dem WRU-Anschluss 25 die beiden Mikro-Relais 1, 1' gleichsinnig oder gegensinnig angesteuert werden können.

Zur Erlangung eines einfachen antivalenten Ausgangs mit gleichsinniger Ansteuerung der zweikanaligen Sensorvorrichtung bedarf es, wie dies in der Fig. 8b für das untere Mikro-Relais 14 gezeigt ist, lediglich der Auslegung des Mikro-Relais 1' nach Fig. 8a als Öffner, wobei die Logikschaltung entfällt.

Die für die einkanaligen Versionen, entsprechend den Darstellungen nach den Figuren 3a, 3b aufgezeigten Eigenschaften und Vorteile, gelten auch bei der Ausführungsform nach der Fig. 8a unverändert für jeden einzelnen Kanal. Darüber hinaus sei erwähnt, dass die beiden Lastkreise LK miteinander in dieser zweikanaligen Form der Ausgangsstufe 10, ebenso freizügig verschaltbar sind, wie dies für das Verhältnis von Ausgangskreis 10 und Lastkreis für die Versionen nach den Figuren 3a, 3b beschrieben ist.

Bei dem in Fig. 8b dargestellten Ausführungsbeispiel ist das obere Mikro-Relais 1 als Schließer und das untere Mikro-Relais 14 als Öffner ausgelegt, wobei die Relais 1, 14 über eine gemeinsame Signalleitung 4 steuerbar sind und somit antivalent schalten. Beide Ausgangsleitungen 5, 6 bzw. 5', 6' der Mikro-Relais sind in diesem Beispiel nach außen geführt.

In ganz vergleichbarer Weise, wie eine wahlweise Verschaltung mit einem Bezugspotenzial für eine einkanalige Version, z.B. in der Fig. 6a, erreicht werden konnte, kann dies auch für die zweikanalige Lösung, wie sie in Fig. 8c dargestellt ist, realisiert werden.
Ergänzend zu der Lösung nach Fig. 8b wird die wahlweise Verschaltung mit dem entsprechenden Bezugspotenzial VDD bzw. VSS dadurch geschaffen, dass intern der Schalter 24 eine Verbindung entweder mit der Anschlussklemme 12 oder 13 herstellt (Fig. 8c).

Anstelle des über die Wirkungsrichtungsumkehr angesteuerten Umschalters 24 ist es auch möglich, eine Lösung über einzelne Schalter 26, 27 durchzuführen, wie dies in der Fig. 6b ausgeführt ist.

Gravierende Vorteile ergeben sich für Steuer- und Ausgangskreis einer Sensorvorrichtung bei Verwendung eines oder mehrerer Mikro-Relais durch die Möglichkeit, eine vereinfachte Ansteuerung zu schaffen, da ein entsprechendes Mikro-Relais auf Halbleiterbasis üblicherweise einen hochohmigen Eingang hat und auch die galvanische Trennung zwischen Steuerkreis und Lastkreis zur Verfügung stellt.
Bei herkömmlichen elektro-mechanischen Relais wären diese Ansteuerungsmöglichkeiten in der Praxis wegen zu hoher Ansteuerströme nicht denkbar.

In Fig. 9a ist eine vereinfachte Beschaltung des Eingangs für ein herkömmliches elektro-mechanisches Relais gezeigt. Zwischen den Versorgungsanschlüssen 32 und 33 liegt in Serie ein Lastwiderstand 34 mit einem Transistor 35, dessen Emitter auf den Anschluss 33 geführt ist. Bei Ansteuerung über den Basisanschluss 37 erhält man am Anschluss 36 ein entsprechendes Signal. Würde man bei dieser Beschaltung ein herkömmliches elektro-mechanisches Relais verwenden, so tritt dies an die Stelle des Lastwiderstandes 34. Falls ein herkömmliches Relais jedoch über die Anschlüsse 36 und 33 eingefügt werden sollte, müßte der Widerstand 34 so niedrig gewählt werden, dass sich diese Anschlussart durch den viel zu hohen Querstrom verbietet.
Auch bei anderen Alternativen, wie z.B. der Ansteuerung eines elektro-mechanischen Relais über die Ausgangsstufen entsprechender Operationsverstärker, Komparatoren oder über eine Logik, müssten diese für die Erzeugung hoher Treiberströme ausgelegt sein. Eine weitere Schwierigkeit tritt hinzu, wenn eine Wirkungsrichtungsumkehr beim entsprechenden Relais gewünscht wird, da dies auf alle Fälle weitere Bauelemente und damit eine Verteuerung bedingt.

Bei Verwendung eines Mikro-Relais 1 lässt sich hingegen die Beschaltung des Einganges relativ einfach und kostengünstig durchführen.

Bei einer allgemeinen Schaltstufe, wie sie in Fig. 9a dargestellt ist, kann, wie in der Fig. 9b gezeigt, das Mikro-Relais 1 zwischen dem positiven Anschluss 32 und dem Anschluss 36, der am Kollektor des Transistors 35 liegt, angeschlossen werden.

Im Beispiel nach der Fig. 9c hingegen liegt das Mikro-Relais 1 an der negativen Versorgungsspannung 33. Aufgrund dieser Wahlfreiheit für die Eingangsbeschaltung des Mikro-Relais 1 kann ohne zusätzliche Bauteile und daher sehr kostengünstig eine gewünschte Wirkungsrichtungsumkehr erreicht werden.
Da der Eingangswiderstand des Mikro-Relais 1 stets als sehr viel größer angenommen werden kann, als der Widerstandswert des Arbeitswiderstandes 34, ergeben sich auch im Hinblick auf die Dimensionierung des Arbeitswiderstandes keine Probleme.

Anhand der Schaltungen nach den Figuren 9b und 9c ist daher gezeigt, wie eine Wirkungsrichtungsumkehr allein durch die Variation der Position des Mikro-Relais 1 im Schaltplan erreicht werden kann. Das Mikro-Relais 1 kann sowohl parallel zum Lastwiderstand 34 als auch parallel zum Transistor 35 gelegt werden. Dies gilt unabhängig davon, ob das Mikro-Relais 1 als Schließer oder Öffner realisiert ist.
Insbesondere im Hinblick auf die in der Automatisierungsindustrie gängige Randbedingung, dass z.B. bei Stromausfall der Ausgang des Sensors eine vorgegebene Schaltstellung einnehmen muss, zeigt sich, dass all diese Varianten in der Praxis gebraucht werden.

Geht man daher für die Anpassungselektronik einer Sensorvorrichtung von einem entsprechenden Layout des Substrates für diese Elektronik aus, so lässt sich eine Realisierung aller Kombinationen aus Wirkungsrichtung und Schaltertyp, n-schaltend etc., dadurch verwirklichen, dass das entsprechende Mikro-Relais einfach auf die passend angeordneten Kontaktflächen des entsprechenden Layouts aufgesetzt wird, ohne dass weitere Bauelemente vorgesehen werden müssen.
Die gewünschte Funktion wird daher allein durch das Positionieren des entsprechenden Mikro-Relais auf dem Schaltungsträger für die Elektronik des Ausgangskreises erreicht.

Weitere vorteilhafte Varianten, um eine Wirkungsrichtungsumkehr des Mikro-Relais 1 zu erreichen, sind in den Figuren 10a, 10b dargestellt. In der Fig. 10a erfolgt die Beschaltung des Eingangs des Mikro-Relais 1 über ein strombegrenzendes Element, z.B. Widerstand 41, der einerseits an der Versorgungsspannung VDD 32 und andererseits am Mikro-Relais 1 und einer parallel dazu vorgesehenen Brücke 44 liegt. Die Brücke 44 liegt mit dem anderen Pol am Signalanschluss 4. Ebenfalls ist die andere Versorgungsspannung VSS vom Anschluss 33 über ein weiteres strombegrenzendes Element, z.B. Widerstand 42, dem Mikro-Relais 1 und einer weiteren Brücke 45 zugeführt. Diese weitere Brücke 45 liegt mit ihrem anderen Pol ebenfalls am Signalanschluss 4. Mittels der Brücken 44, 45 kann daher eine programmierbare Wirkungsrichtung des Mikro-Relais 1 erreicht werden. Dies geschieht beispielsweise durch Auftrennen der entsprechenden Brücke oder Hinzufügen bzw. Schließen der entsprechenden Brücke. Eine derartige Anschlussänderung kann sowohl fest bei der Herstellung des Sensors erfolgen, als auch vom Anwender am Einsatzort wahlweise durchgeführt werden. So können diese Brücken 44, 45 von außen, z.B. in einem Klemmenraum, zugänglich sein.

Eine steuerbare Wirkungsrichtungsumkehr des Mikro-Relais 1 ist in Fig. 10b dargestellt. Hierbei wird eine Graetz-Brücke dem Mikro-Relais 1 vorgeschaltet.
Aufgrund der besonderen Eigenschaften des Mikro-Relais 1 wie Potenzialfreiheit am Steuereingang, galvanische Trennung zwischen Eingangs- und Ausgangsseite und hoher Eingangsimpedanz, kann eine WRU-Funktion in besonders einfacher Weise mit einer Gleichrichterbrücke, speziell einer Graetzbrücke 46, ausgeführt werden.
Die entsprechende Beschaltung ist schematisch in Fig. 10b dargestellt. Die Gleichrichterbrücke 46 liegt mit ihren Gleichspannungsanschlüssen am Mikro-Relais 1. Weiterhin ist der Signalanschluss 4 und, umschaltbar über den Umschalter 47, ein entsprechender Anschluss der Versorgungsspannung 32 bzw. 33 an die Gleichrichterbrücke gelegt.

Bei Verwendung eines herkömmlichen elektro-mechanischen Relais würde dies keine sinnvolle Schaltungstechnik zur Ansteuerung des Relais darstellen.

Die Wirkungsrichtungsumkehr kann im letztgenannten Fall der Beschaltung nach Fig. 10b entweder durch das wahlweise Einfügen einer Brücke, die extern zugänglich sein kann, oder durch eine Steuerlogik am entsprechenden Steuereingang 31 bewirkt werden. Diese Steuerung kann bei entsprechenden Vorgaben auch die Wirkungsrichtungsumkehr im laufenden Betrieb der Sensorvorrichtung beeinflussen. Eine feste Verschaltung des Steuereingangs mit einem Bezugspotenzial ist ebenfalls möglich.

## Patentansprüche

1. Grenzwertsensor-Vorrichtung,
- mit einer Sensoreinrichtung zum Nachweis einer Messgröße,
- mit einer der Sensoreinrichtung zugeordneten Schalteinrichtung zum Schalten eines Lastkreises,
- wobei die Schalteinrichtung zu ihrer Ansteuerung einen Steuerkreis mit Steueranschlüssen aufweist, mit welchem die Sensoreinrichtung in Wirkverbindung steht,
- wobei die Schalteinrichtung einen mit Hilfe des Steuerkreises schaltbaren und von diesem galvanisch getrennten Ausgangskreis mit Ausgangsanschlüssen aufweist, bei welchen in mindestens einem Schaltzustand eine galvanische Trennung gegeben ist,
- wobei die Sensoreinrichtung lastkreisunabhängig ausgebildet ist und
- wobei der Lastkreis in direkter Wirkverbindung mit dem Ausgangskreis der Schalteinrichtung angeordnet ist.
**dadurch gekennzeichnet,**
- **dass** die Schalteinrichtung zur nahezu leistungslosen Ansteuerung als Silizium-Mikro-Relais ausgebildet ist,
- **dass** das Mikro-Relais wenigstens ein in der Weise einer Blattfeder oder eines Biegebalkens arbeitendes Schaltelement (2) mit einer mikromechanischen Struktur aufweist, welches elektrostatisch oder piezoelektrisch betätigbar ausgelegt ist und
- **dass** die Sensoreinrichtung zum Nachweis von Gegenständen und/oder fluiden Stoffen als Näherungssensor oder Füllstandssensor ausgelegt ist, der bei Einreichen eines vorgegebenen Werts die Schalteinrichtung betätigt.

2. Sensorvorrichtung nach Anspruch 1,
**dadurch gekennzeichnet,**
**dass** die Sensoreinrichtung als induktiver, kapazitiver, opto-elektronischer, Ultraschall-, oder Magnetfeld-Näherungssensor ausgebildet ist.

3. Sensorvorrichtung nach einem der Ansprüche 1 oder 2,
**dadurch gekennzeichnet,**
**dass** die Schalteinrichtung (1) als Schließer (bei 1) oder Öffner (bei 14) ausgebildet ist, und
**dass** ein separater Steuereingang (4) für die Ansteuerung der Schalteinrichtung (1) oder eine mit der Spannungsversorgung (12, 13) der Schalteinrichtung (1) gekoppelte Ansteuerung der Schalteinrichtung vorgesehen ist.

4. Sensorvorrichtung nach einem der Ansprüche 1 bis 3,
**dadurch gekennzeichnet,**
**dass** die Ansteuerung (4) der Schalteinrichtung (1) programmierbar und/oder fest verdrahtet ausgebildet ist.

5. Sensorvorrichtung nach einem der Ansprüche 1 bis 4,
**dadurch gekennzeichnet,**
**dass** die Anschlüsse (4) des Steuerkreises der Schalteinrichtung (1) und die Ausgangsanschlüsse (5, 6) für den Lastkreis (15, 16) für ein potenzialfreies Schalten des Lastkreises ausgelegt sind.

6. Sensorvorrichtung nach einem der Ansprüche 1 bis 5,
**dadurch gekennzeichnet,**
**dass** ein Ausgangsanschluss (5, 6) der Schalteinrichtung (1) für den Lastkreis (15) intern (21, 22) in der Schalteinrichtung oder extern mit einem Anschluss (12, 13) der Versorgungsspannung verbunden oder verbindbar ist.

7. Sensorvorrichtung nach einem der Ansprüche 1 bis 6,
**dadurch gekennzeichnet,**
**dass** für ein Schalten des Lastkreises (15) mit beliebigem Bezug zur Versorgungsspannung (11) der Schalteinrichtung (1), im Lastkreis (15) eine separate Spannungsquelle (16) vorsehbar ist.

8. Sensorvorrichtung nach einem der Ansprüche 1 bis 7,
**dadurch gekennzeichnet,**
**dass** der Lastkreis (15) mit einem Versorgungsspannungsanschluss (12, 13) der Schalteinrichtung (1) verbindbar ist.

9. Sensorvorrichtung nach einem der Ansprüche 1 bis 8,
**dadurch gekennzeichnet,**
**dass** der Ausgangskreis (10) als 3-Draht-Anschluss (5, 12, 13; 6, 12, 13) nach außen ausgelegt ist.

10. Sensorvorrichtung nach Anspruch 9,
**dadurch gekennzeichnet,**
**dass** zwei Anschlüsse (12, 13) des 3-Draht-Anschlusses an der Versorgungsspannung liegen,
**dass** ein ansteuerbarer Umschalter (24) für den schaltbaren Lastkreis-Anschluss (6) vorgesehen ist, und
**dass** der schaltbare Lastkreis-Anschluss (6) mittels des Umschalters (24) alternativ mit einem der Versorgungsspannungsanschlüsse (12, 13) verbindbar ist.

11. Sensorvorrichtung nach einem der Ansprüche 9 oder 10,
**dadurch gekennzeichnet,**
**dass** der schaltbare Lastkreis-Anschluss (6) mittels zweier gegensinnig steuerbarer Schalter (26, 27) mit einem der Versorgungsspannungsanschlüsse (12, 13) verbindbar ist.

12. Sensorvorrichtung nach einem der Ansprüche 1 bis 11,
**dadurch gekennzeichnet,**
**dass** für eine zwei-kanalige Steuerung von Lastkreisen zwei Mikro-Relais (1, 1'; 1, 14) mit Ansteuerung innerhalb des Ausgangskreises (10) parallel angesteuert sind und mindestens die Ausgangsanschlüsse (5, 6, 5', 6') der Lastkreise nach außen geführt sind.

13. Sensorvorrichtung nach Anspruch 12,
**dadurch gekennzeichnet,**
**dass** die zwei Mikro-Relais (1, 1'; 1, 14) gleichsinnig (1, 1') oder gegensinnig (1, 14) schaltend sind.

14. Sensorvorrichtung nach einem der Ansprüche 1 bis 13,
**dadurch gekennzeichnet,**
**dass** die Ansteuerung des Lastkreises (15) oder von mehreren, auch unterschiedlichen Lastkreisen (15) mit einer Einrichtung (24, 25, 26, 27) zur Wirkungsrichtungsumkehr ausgelegt ist.

15. Sensorvorrichtung nach einem der Ansprüche 1 bis 14,
**dadurch gekennzeichnet,**
**dass** zur Wirkungsrichtungsumkehr des Mikro-Relais (1) im Ansteuerkreis des Mikro-Relais (1) ein XOR-Glied (exclusiv-oder), insbesondere eine Graetz-Brücke (46) vorgesehen ist.

16. Sensorvorrichtung nach einem der Ansprüche 1 bis 15,
**dadurch gekennzeichnet,**
**dass** zur Wahl der Wirkungsrichtung des Mikro-Relais (1) schließbare und/oder trennbare Brückenglieder (44, 45) und Widerstände (41, 42) vorgesehen sind.

17. Sensorvorrichtung nach einem der Ansprüche 1 bis 16,
**dadurch gekennzeichnet,**
**dass** die gewünschte Funktion des Mikro-Relais (1), z.B. zur Wirkungsrichtungsumkehr, im Wesentlichen ohne zusätzliche Bauelemente, durch Umpositionierung des Mikro-Relais in der Schaltung, insbesondere der Eingangsbeschaltung des Mikro-Relais, oder der Anpassungselektronik erreichbar ist.

18. Verwendung eines Silizium-Mikro-Relais, das mindestens ein in der Weise einer Blattfeder oder eines Biegebalkens arbeitendes Schaltelement mit einer mikromechanischen Struktur aufweist, welches elektrostatisch oder piezoelektrisch betätigbar ausgelegt ist, mit
- einem Steuerkreis mit Steueranschlüssen zur nahezu leistungslosen Ansteuerung des Mikro-Relais,
- mit einem mittels des Steuerkreises schaltbaren und von diesem galvanisch getrennten Ausgangskreis mit Ausgangsanschlüssen, welche ihrerseits in mindestens einem Schaltzustand eine galvanische Trennung aufweisen, als Schalteinrichtung zum Schalten eines Lastkreises in einer Grenzwertsensor-Vorrichtung, mit
- einer Sensoreinrichtung zum Nachweis einer Messgröße,
- wobei die Sensoreinrichtung mit dem Steuerkreis des Mikro-Relais in Wirkverbindung steht,
- wobei die Sensoreinrichtung zum Nachweis von Gegenständen oder fluiden Materialien als Näherungssensor oder Füllstandssensor ausgebildet ist, der bei Erreichen eines vorgegebenen Werts die Schalteinrichtung betätigt,
- wobei die Sensoreinrichtung lastkreisunabhängig ausgebildet ist und
- wobei der Lastkreis in direkter Wirkverbindung zu dem Ausgangskreis der Schalteinrichtung angeordnet ist.

## Claims

1. Threshold value sensor device,
- with a sensor system for detecting a measured quantity,
- with a switching device for switching a load circuit and which is associated with the sensor system,
wherein
- for driving the switching device it has a control circuit with control terminals with which the sensor system is in operative connection,
- the switching device has an output circuit switchable with the aid of the control circuit and galvanically separated therefrom and provided with output terminals in which there is a galvanic separation in at least one switching state,
- the sensor system is constructed independent of the load circuit,
- the load circuit is in direct operative connection with the output circuit of the switching device,
**characterized in that**
- the switching device is constructed for almost wattlesdrive purposes as a silicon microrelay,
- that the microrelay has at least one switching element (2) having a mircromechanical structure operating like a leaf spring or a bender bar, which is constructed in electro-statical or piezoelectrical operatable manner and
- that the sensor system for detecting objects and/or fluid substances is designed as a proximity sensor or level sensor which operates the switching device if a preset value is reached.

2. Sensor device according to claim 1,
**charcterized** in that
the sensor system is constructed as an inductive, capacitive, optoelectronic, ultrasonic or magnetic field proximity sensor.

3. Sensor device according to one of the claims 1 or 2,
**characterized in that**
the switching device (1) is constructed as a normally open contact (at 1) or normally closed contact (at 14) and that there is a separate control input (4) for driving the switching device (1) or a drive of the switching device coupled to the voltage supply (12, 13) of the switching device (1).

4. Sensor device according to one of the claims 1 to 3,
**characterized in that**
the drive (4) of the switching device (1) is constructed in programmable and/or fixed wired manner.

5. Sensor device according to one of the claims 1 to 4,
**characterized in that**
the terminals (4) of the control circuit of the switching device (1) and the output terminals (5, 6) for the load circuit (15, 16) are designed for a potential-free switching of the load circuit.

6. Sensor device according to one of the claims 1 to 5,
**characterized in that**
an output terminal (5, 6) of the switching device (1) for the load circuit (15) is connected or connectable internally (21, 22) in the switching device or externally with a supply voltage terminal (12, 13).

7. Sensor device according to one of the claims 1 to 6,
**characterized in that**
it is possible to provide a separate voltage source (16) in the load circuit (15) for switching the load circuit (15) with random reference to the voltage supply (11) of the switching device (1).

8. Sensor device according to one of the claims 1 to 7,
**characterized in that**
the load circuit (15) is connectable to a supply voltage terminal (12, 13) of the switching device (1)

9. Sensor device according to one of the claims 1 to 8,
**characterized in that**
the output circuit (10) is constructed as a three-wire terminal (5, 12, 13; 6, 12, 13) to the outside.

10. Sensor device according claim 9,
**characterized in that**
two terminals (12, 13) of the three-wire terminal are at the supply voltage,
that a drivable reversing switch (24) is provided for the switchable load circuit terminal (6) and
that the switchable load circuit terminal (6) can be connected by means of the reversing switch (24) in alternative manner with one of the supply voltage terminals (12, 13).

11. Sensor device according to one of the claims 9 to 10,
**characterized in that**
the switchable load circuit terminal (6) is connectable by means of two switches (26, 27) to one of the supply voltage terminals (12, 13), the switches (26, 27) being controllable in opposite directions.

12. Sensor device according to one of the claims 1 to 11,
**characterized in that**
for a two-channel control of the load circuits two microrelays (1, 1'; 1, 14) are driven in parallel with a drive within the output circuit (10) and at least the output terminals (5, 6, 5', 6') of the load circuits are led to the outside.

13. Sensor device according to claim 12,
**characterized in that**
said two microrelays (1, 1'; 1, 14) are switching in the same (1, 1') or opposite (1, 14) directions.

14. Sensor device according to one of the claims 1 to 13,
**characterized in that**
the drive of the load circuit (15) or several, also different load circuits (15) is designed with an action direction reversal device (24, 25, 26, 27).

15. Sensor device according to one of the claims 1 to 14,
**characterized in that**
a XOR element (exclusive-or) particularly a Graetz-bridge rectifier (46) is provided in the drive circuit of the microrelay (1) for reversing the action direction of the microrelay (1).

16. Sensor device according to one of the claims 1 to 15,
**characterized in that**
for choosing the action direction of the microrelay (1), closable and/or separable bridge members (44, 45) and resistors (41, 42) are provided.

17. Sensor device according to one of the claims 1 to 16,
**characterized in that**
the desired function of the microrelay (1), e.g. for action direction reversal, can be obtained essentially without additional components, by repositioning the microrelay in the circuit, particularly the input configuration of the microrelay, or the matching electronics.

18. Use of a silicon microrelay, having at least one switching element operating like a leaf spring or a bender bar with a micromechanical structure, being constructed in electro-statical or piezoelectrical operatable manner, comprising
- a control circuit with control terminals for almost wattless driving of the microrelay,
- with an output circuit switchable by means of the control circuit and galvanically separated therefrom and having output terminals, which in turn have a galvanic separation in at least one switching state, as a switching device for switching a load circuit in a threshold value sensor device having
- a sensor system for detecting a measured quantity,
- the sensor system being in operative connection with the control circuit of the microrelay,
- the sensor system being constructed for the detection of objects or fluid materials as a proximity sensor or level sensor, which operates the switching device if a preset value is reached,
- the sensor system being constructed independent of the load circuit and
- the load circuit being arranged in direct operative connection with the output circuit of the switching device.

## Revendications

1. Dispositif capteur de valeur limite,
- avec un système capteur destiné à détecter une grandeur de mesure,
- avec un dispositif de commutation associé au système capteur pour commuter un circuit de charge,
- le dispositif de commutation présentant pour sa commande un circuit de commande avec des branchements de commande, avec lequel le système capteur est en liaison active,
- le dispositif de commutation présentant un circuit de sortie commutable à l'aide du circuit de commande et séparé galvaniquement de celui-ci, avec des branchements de sortie sur lesquels, dans au moins un état de commutation, une séparation galvanique est donnée,
- le système capteur étant réalisé indépendant du circuit de charge, et
- le circuit de charge étant placé en liaison active directe avec le circuit de sortie du dispositif de commutation,
***caractérisé***
- ***en ce que*** le dispositif de commutation est conformé en micro-relais au silicium pour une commande pratiquement sans puissance,
- ***en ce que*** le micro-relais comprend au moins un élément de commutation (2) fonctionnant à la manière d'un ressort à lame ou d'une barre de flexion, à structure micro-mécanique, qui est conçu actionnable électrostatiquement ou piézoélectriquement, et
- ***en ce que*** le système capteur est conformé, pour détecter des objets et/ou des matières fluides, en capteur de proximité ou capteur de niveau qui actionne le dispositif de commande quand on atteint une valeur prédéterminée.

2. Dispositif capteur selon la revendication 1,
***caractérisé en* ce que**
le système capteur est conformé en capteur de proximité inductif, capacitif, opto-électronique, à ultrasons, ou à champ magnétique.

3. Dispositif capteur selon la revendication 1 ou 2,
***caractérisé en* ce que**
le dispositif de commutation (1) est conformé en fermeur (en 1) ou en ouvreur (en 14), et
*en ce qu*'il est prévu une entrée de commande séparée (4) pour la commande du dispositif de commutation (1) ou une commande du dispositif de commutation couplée à l'alimentation en tension (12, 13) du dispositif de commutation (1).

4. Dispositif capteur selon l'une quelconque des revendications 1 à 3,
***caractérisé en* ce *que***
la commande (4) du dispositif de commutation (1) est réalisée programmable et/ou à câblage fixe.

5. Dispositif capteur selon l'une quelconque des revendications 1 à 4,
***caractérisé* en ce que**
les branchements (4) du circuit de commande du dispositif de commande (1) et les branchements de sortie (5, 6) pour le circuit de charge (15, 16) sont conçus pour une commutation hors potentiel du circuit de charge.

6. Dispositif capteur selon l'une quelconque des revendications 1 à 5,
***caractérisé en* ce**
**qu'**un branchement de sortie (5, 6) du dispositif de commutation (1) pour le circuit de charge (15) est relié ou peut être relié de manière interne (21, 22) dans le dispositif de commutation ou de manière externe à un branchement (12, 13) de la tension d'alimentation.

7. Dispositif capteur selon l'une quelconque des revendications 1 à 6,
***caractérisé* en ce que**,
pour une commutation du circuit de charge (15) avec un rapport quelconque à la tension d'alimentation (11) du dispositif de commutation (1), une source de tension séparée (16) peut être prévue dans le circuit de charge (15).

8. Dispositif capteur selon l'une quelconque des revendications 1 à 7,
***caractérisé* en ce que**
le circuit de charge (15) peut être relié à un branchement (12, 13) de tension d'alimentation du dispositif de commutation (1).

9. Dispositif capteur selon l'une quelconque des revendications 1 à 8,
***caractérisé* en ce que**
le circuit de sortie (10) est conformé en direction de l'extérieur en un branchement à trois fils (5, 12, 13 ; 6, 12, 13).

10. Dispositif capteur selon la revendication 9,
***caractérisé***
**en ce que** deux branchements (12, 13) du branchement à trois fils se trouvent sur la tension d'alimentation,
**en ce qu'**un inverseur commandable (24) est prévu pour le branchement commutable (6) du circuit de charge, et
***en ce que*** le branchement commutable (6) du circuit de charge peut être relié au moyen de l'inverseur (24) en variante à l'un des branchements (12, 13) de tension d'alimentation.

11. Dispositif capteur selon l'une quelconque des revendications 9 ou 10,
***caractérisé en ce que***
le branchement commutable (6) du circuit de commande peut être relié au moyen de deux commutateurs (26, 27) commandables en sens inverse à l'un des branchements (12, 13) de tension d'alimentation.

12. Dispositif capteur selon l'une quelconque des revendictions 1 à 11,
***caractérisé en* ce que**,
pour une commande de circuit de charge à deux canaux, deux micro-relais (1, 1' ; 1, 14) sont commandés parallèlement avec commande à l'intérieur du circuit de sortie (10) et au moins les branchements de sortie (5, 6, 5', 6') des circuits de charge sortent vers l'extérieur.

13. Dispositif capteur selon la revendication 12,
***caractérisé* en ce *que***
les deux micro-relais (1, 1' ; 1, 14) commutent dans le même sens (1, 1') ou en sens inverse (1, 14).

14. Dispositif capteur selon l'une quelconque des revendications 1 à 13,
***caractérisé en ce que***
la commande du circuit de charge (15) ou de plusieurs circuits de charge (15) même différents est réalisée avec un dispositif (24, 25, 26, 27) pour inverser le sens d'action.

15. Dispositif capteur selon l'une quelconque des revendications 1 à 14,
***caractérisé en ce que**,*
pour inverser le sens d'action du micro-relais (1), il est prévu dans le circuit de commande du micro-relais (1) un élément XOR (exclusif ou), en particulier un point de Graetz (46).

16. Dispositif capteur selon l'une quelconque des revendications 1 à 15,
***caractérisé en* ce *que***
pour choisir le sens d'action du micro-relais (1), des éléments de pont (44, 45) et résistances (41, 42) fermables et/ou séparables sont prévus.

17. Dispositif capteur selon l'une quelconque des revendications 1 à 16,
***caractérisé en* ce que**
la fonction souhaitée du micro-relais (1), par exemple pour l'inversion de sens d'action, peut être obtenue pour l'essentiel sans composant supplémentaire, par changement de position du micro-relais dans le circuit, en particulier du circuit d'entrée du micro-relais, ou de l'électronique d'adaptation.

18. Utilisation d'un micro-relais au silicium qui comprend un élément de commutation fonctionnant à la manière d'une ressort à lame ou d'une barre de flexion, à structure micro-mécanique, qui est conçu actionnable électrostatiquement ou piézoélectriquement, avec
- un circuit de commande avec des branchements de commande pour commander le micro-relais pratiquement sans puissance,
- avec un circuit de sortie commutable à l'aide du circuit de commande et séparé galvaniquement de celui-ci, avec des branchements de sortie qui, dans au moins un état de commutation, présentent une séparation galvanique, en tant que dispositif de commutation pour commuter un circuit de charge dans un dispositif capteur de valeur limite, avec
- un système capteur pour détecter une grandeur de mesure,
- le système capteur étant en liaison active avec le circuit de commande du micro-relais,
- le système capteur étant conformé, pour détecter des objets et/ou des matières fluides, en capteur de proximité ou capteur de niveau, qui actionne le dispositif de commande quand on atteint une valeur prédéterminée,
- le système capteur étant réalisé indépendant du circuit de charge, et
- le circuit de charge étant placé en liaison active directe avec le circuit de sortie du dispositif de commutation.
